# EUROPEAN PATENT SPECIFICATION

(11) **EP 1 651 709 B1**
(45) Date of publication and mention of the grant of the patent: **09.07.2008**
(21) Application number: 04776801.5
(22) Date of filing: 16.06.2004
(51) Int. Cl.: C08J 5/18, C08L 23/10, D01F 6/46

(54) **ALKYL ACRYLATE COPOLYMER MODIFIED ORIENTED POLYPROPYLENE FILMS, TAPES, FIBERS AND WOVEN AND NONWOVEN TEXTILES**
ORIENTIERTE FOLIEN, -BÄNDER, -FASERN UND GEWEBTE UND NICHT GEWEBTE TEXTILIEN AUS ALKYLACRYLATCOPOLYMERMODIFIZIERTEM POLYPROPYLEN
FILMS, RUBANS, FIBRES ET TEXTILES TISSES ET NON TISSES A BASE DE POLYPROPYLENE ORIENTE, MODIFIE PAR DES COPOLYMERES D'ACRYLATE D'ALKYLE

(30) Priority: 07.08.2003 US 493260 P; 17.02.2004 US 780385
(43) Date of publication of application: 03.05.2006
(73) Proprietor: E. I. DU PONT DE NEMOURS AND COMPANY, Wilmington, Delaware 19898 (US)
(72) Inventor: THAI, Hwee Tatz, Singapore 568263 (SG); SAMUELS, Sam Louis, Landenberg, Pennsylvania 19350 (US); ROLLAND, Loic Pierre, 01220 Divonne Les Bains (FR)
(74) Representative: Heinemann, Monica
(86) International application number: PCT/US2004/019658
(87) International publication number: WO 2005/017008

(56) References cited:
- EP-A- 1 283 243
- WO-A-02/12390
- WO-A-95/33882
- GB-A- 902 809
- US-A- 5 614 574
- DATABASE WPI Section Ch, Week 197803 Derwent Publications Ltd., London, GB; Class A94, AN 1978-05093A XP002295882 & JP 52 142785 A (CHUETSU POLYCOAT KK) 28 November 1977 (1977-11-28)

## Description

This invention relates to films, tapes and fibers comprising polypropylene modified with ethylene/alkyl acrylate copolymers. It also relates to woven and nonwoven textiles prepared from melt-spun fibers prepared from these modified polypropylene compositions. It also relates to methods for preparing slit film fibers of these modified polypropylene compositions.

### BACKGROUND ART

Oriented films comprising polypropylene may be formed from the molten polymer by a number of methods known in the art. Films can be oriented in one direction by hot-drawing in the machine direction with a tensioning device, and annealing. Films can also be oriented in two directions (machine direction and transverse direction) by suitable tensioning devices. Oriented polypropylene films are useful for a wide variety of packaging applications.

Fibers comprising polypropylene may be formed directly from the molten polymer by a number of methods known in the art, including melt-spinning, centrifugal spinning and melt-blowing.

Fibers also may be prepared from extruded polypropylene (PP) homopolymer or copolymer films. Flat films can be extruded into a cooling water bath or onto chilled rolls for quenching. Alternatively, a tubular blown film can be extruded through an annular die and air-quenched. The quenched film is then knife-slit into tapes. The tapes are then stretched (i.e. uniaxially oriented) to several times their original length by hot-drawing in the machine direction with a tensioning device and annealing the stretched tapes having controlled widths, for example, from about 2.5 mm to about 6.5 mm. The stretched tapes provide monofilament fibers.

Melt spun fibers can be incorporated into nonwoven textiles by many technologies, including dry laid, wet laid, air laid, spunbond, spunlace, and needlepunch processes. The nonwovens so produced can be used in a wide range of applications including apparel, carpet backing, agrotextiles and geotextiles.

Polypropylene fibers can be used in twines or ropes or to prepare yarns for carpets. Polypropylene fibers also can be woven or knitted into fabrics used in applications such as tarpaulins, liners, banners, sacking, carpet backing, agrotextiles and geotextiles.

To reduce the cost of the fabric woven from stretched slit-film tapes it is desirable to:

reduce the denier (similar width but lower thickness) of the tape;

increase the width of the tape (with similar thickness) and reduce the construction of the woven fabric by reducing the number of tapes per dimension (for example, from an 8 x 8 tapes/square inch to a 5 x 5 tapes/square inch construction); and/or

increase the amount of inert filler such as CaCO₃ in the polypropylene formulation.

With conventional polypropylene compositions used in preparing tapes, it is rather difficult to achieve all the above objectives. Higher stretch ratios and reduced denier can result in unacceptable loss of physical properties. Undesirable fibrillation of PP tapes under high stretch ratios must also be overcome.

Similarly, it is also desirable to provide oriented polypropylene films and fibers with improved mechanical properties such as tensile breaking load, tenacity (tensile breaking stress) and elongation to break.

Polypropylene fibers with improved mechanical properties have been prepared by adding small amounts of additives to polypropylene. For example, PCT Patent Application Publication WO 2003/048434 describes a method for making polypropylene monofilaments by adding 0.1 to 20 % of an additive consisting of a combination of lubricant, filler, and heat stabilizer. European Patent EP0080274B1 describes methods for making polypropylene melt-spun fibers by adding 0.1 to 10 % of another polymer that is immiscible in a melt of the polypropylene (in particular, polyhexamethylene adipamide). Polypropylene has also been modified by the addition of small amounts of liquid crystal polymers, polyethylene, polyethylene glycol and nylon 66 (Journal of Applied Polymer Science, 1986, 31 (8), 2753-68.). Improvement of the mechanical properties of the modified compositions has been attributed to a lowering of spun orientation, or wind-up speed suppression.

Blends of polypropylene and ethylene/alky acrylate copolymers have been previously disclosed (see, for example, U.S. Patent Number 3,433,573). US 5,614,574 describes drawn melt spun polypropylene fibers modified with ethylene copolymers and hydrophilic modifiers. The fibers described therein are drawn to a draw ratio of 3.
WO 95/33882 discloses drawn melt spun polypropylene fibers which are modified with ethylene/alkyl acrylate and hydrophilic modifiers. The fibers disclosed therein are drawn to a draw ratio of 3.

### DISCLOSURE OF THE INVENTION

The present invention relates to the enhancement of the mechanical properties such as tensile breaking load, tenacity (tensile breaking stress) and elongation to break (%) of stretched polypropylene films and tapes and enhancement of tenacity and elongation to break (%) of melt spun polypropylene fibers. These enhancements are achieved by incorporating a small percentage (from 1 to 30, preferably from 1 to 15 weight %) of an ethylene/alkyl acrylate copolymer in the PP formulations used to prepare the oriented films and fibers which are drawn at a temperature below the melting point of the polypropylene polymer and at a draw ratio of greater than 3, as recited in the claims. (the PP formulations may contain other materials selected from fillers such as CaCO₃ and additives such as UV stabilizers, pigments etc.). Blending of ethylene/alkyl acrylate copolymers with PP also improves the processability of the PP resin by, for example, increasing the melt strength of the molten PP resin. These blends provide improved stretchability and drawability for films and fibers over conventional polypropylene films and fibers. The drawability of tapes prepared from these blends is improved during manufacturing (i.e. the blends allow increased draw ratios with no or reduced tape fibrillation). Benefits of the modified polypropylene blends include higher strength at the same tape or fiber denier with no loss in elongation at break.

The modified polypropylene blends can also provide cost reduction by allowing production of finer denier polypropylene fibers having the same performance level as unmodified fibers at the same equipment throughput. Alternatively, higher throughput may be achieved at the same denier with improved performance. The blends described herein will provide lower production downtime for most processes, resulting from fewer breaks.

An object of this invention is to improve the mechanical properties such as tensile breaking load, tenacity and elongation at break of polypropylene compositions used in films, melt-spun fibers, slit-film tapes and fibers there from by incorporating ethylene/alkyl acrylate copolymers into the PP resin formulations used for their preparation.

Another object of this invention is to improve or maintain the elastic properties of polypropylene homopolymer formulations loaded with higher levels of inert fillers such as CaCO₃ by incorporating a certain level of ethylene/alkyl acrylate copolymers or using ethylene/alkyl acrylate copolymers as the resin vehicles (for filler loading) in the polypropylene formulations. The aim is to improve the stretchability of the films, tapes and slit film fibers without loss of tensile properties.

Another object of this invention is to improve the processability of PP formulations by incorporation of a small percentage of ethylene/alkyl acrylate copolymers. Generally, the cooling of a cast film (before slitting) by a chilled roll is less efficient than by using a chilled water bath. The stretchability of a film cooled on a chilled roll is poor, because the slower cooling results in a more crystalline film. The incorporation of ethylene/alkyl acrylate copolymers enhances the stretchability of the films and overcomes or reduces the fibrillation of the slit film tapes prepared from such films in subsequent drawing. It also enhances the drawability of melt spun fibers and enhances the tensile properties of the drawn fibers.

Another object of this invention is to enhance the tensile properties (tensile breaking load, tenacity and elongation at break) of the stretched tape with a lower denier.

Additional benefits of the modified polypropylene blends described herein include improved uniformity in thickness and width of films and fibers, reduced static, and improved abrasion resistance.

Accordingly, this invention provides an oriented film prepared from a composition comprising
(a) at least one polypropylene polymer selected from the group consisting of polypropylene homopolymers; random copolymers or block copolymers of polypropylene and ethylene; and random terpolymers or block terpolymers of polypropylene, ethylene and one other olefin; and
(b) from 1 to 30 weight % or, in increasing order of preference, 2 to 30 weight %, 2 to 20 weight %, or 2 to 10 weight % of at least one ethylene/ alkyl acrylate copolymer, preferably a tubular reactor produced ethylene/alkyl acrylate copolymer; and optionally
(c) from 0.01 to 40 weight % or preferably 0.1 to 15 weight % of at least one additional component selected from the group consisting of fillers, delustrants, UV stabilizers, pigments and other additives;
wherein the alkyl group of the alkyl acrylate has less than 6 carbon atoms; the alkyl acrylate is preferably present in the ethylene/alkyl acrylate copolymer in a range from about 5 to about 30 weight %, or preferably from about 10 to about 25 weight %; the alkyl acrylate is preferably methyl acrylate, ethyl acrylate, or butyl acrylate, or more preferably is methyl acrylate; and the film is prepared by drawing at a temperature below the melting point of the polypropylene polymer and at a draw ratio of greater than 3 or preferably of about 4:1 to about 10:1.

This invention also provides a slit film tape prepared from said film.

This invention also provides a fiber prepared by hot-drawing and annealing said slit film tape prepared from said film.

This invention further provides a melt-spun fiber prepared from said film.

This invention also provides nonwoven textiles prepared from melt-spun fibers as described above.

Benefits of using the modified polypropylene blends described herein include improvements in tensile strength, "low speed" perforation and "high speed" perforation.

This invention also provides processes for preparing slit film fibers comprising

(1) preparing a composition as described above;

(2) forming said composition into a film;

(3) slitting said film into tapes;

(4) hot-drawing and annealing a tape of step (3) at a draw ratio of greater than 3.

### DETAILED DESCRIPTION OF THE INVENTION

"Copolymer" means polymers containing two or more different monomers. The terms "dipolymer" and "terpolymer" mean polymers containing only two and three different monomers respectively. The phrase "copolymer of various monomers" means a copolymer whose units are derived from the various monomers.

As indicated above, the films, tapes and fibers of this invention are prepared from a composition comprising polypropylene resins modified with ethylene/alky acrylate copolymers.

Polypropylene (abbreviated PP) polymers include homopolymers, random copolymers, block copolymers and terpolymers of propylene. Copolymers of propylene include copolymers of propylene with other olefins such as ethylene, 1-butene, 2-butene and the various pentene isomers, etc. and preferably copolymers of propylene with ethylene. Terpolymers of propylene include copolymers of propylene with ethylene and one other olefin. Random copolymers, also known as statistical copolymers, are polymers in which the propylene and the comonomer(s) are randomly distributed throughout the polymeric chain in ratios corresponding to the feed ratio of the propylene to the comonomer(s). Block copolymers are made up of chain segments consisting of propylene homopolymer and of chain segments consisting of, for example, random copolymers of propylene and ethylene. The term "polypropylene" when used herein is used generically to refer to any or all of the polymers comprising propylene described above.

Polypropylene homopolymers or random copolymers can be manufactured by any known process. For example, polypropylene polymers can be prepared in the presence of Ziegler-Natta catalyst systems, based on organometallic compounds and on solids containing titanium trichloride.

Block copolymers can be manufactured similarly, except that propylene is generally first polymerized by itself in a first stage and propylene and additional comonomers such as ethylene are then polymerized, in a second stage, in the presence of the polymer obtained during the first. Each of these stages can be carried out, for example, in suspension in a hydrocarbon diluent, in suspension in liquid propylene, or else in gaseous phase, continuously or noncontinuously, in the same reactor or in separate reactors.

Additional information relating to block copolymers and to their manufacture may be found particularly in chapters 4.4 and 4.7 of the work "Block Copolymers" edited by D. C. Allport and W. H. Janes, published by Applied Science Publishers Ltd in 1973.

The term "ethylene/alkyl acrylate copolymers " includes copolymers of ethylene and alkyl acrylates wherein the alkyl moiety contains from one to six carbon atoms. Examples of alkyl acrylates include methyl acrylate, ethyl acrylate and butyl acrylate. "Ethylene/methyl acrylate (abbreviated EMA)" means a copolymer of ethylene (abbreviated E) and methyl acrylate (abbreviated MA). "Ethylene/ethyl acrylate (abbreviated EEA)" means a copolymer of ethylene (abbreviated E) and ethyl acrylate (abbreviated EA). "Ethylene/butyl acrylate (abbreviated EBA)" means a copolymer of ethylene (abbreviated E) and butylacrylate (abbreviated BA).

The relative amount of the alkyl acrylate comonomer incorporated into ethylene/alkyl acrylate copolymer can, in principle, vary broadly from a few weight percent up to as high as 40 weight percent of the total copolymer or even higher. Similarly, the choice of the alkyl group can, again in principle, vary from a simple methyl group up to a six-carbon atom alkyl group with or without significant branching. The relative amount and choice of the alkyl group present in the alkyl acrylate ester comonomer can be viewed as establishing how and to what degree the resulting ethylene copolymer is to be viewed as a polar polymeric constituent in the thermoplastic composition.

Preferably, the alkyl group in the alkyl acrylate comonomer has from one to four carbon atoms and the alkyl acrylate comonomer has a concentration range of from 5 to 30 weight percent of the ethylene/alkyl acrylate copolymer, preferably from 10 to 25 weight %. Most preferably, the alkyl group in the alkyl acrylate comonomer is methyl.

Ethylene/ alkyl acrylate copolymers can be prepared by processes well known in the polymer art using either autoclave or tubular reactors. The copolymerization can be run as a continuous process in an autoclave: ethylene, the alkyl acrylate, and optionally a solvent such as methanol (see U.S. Patent Number 5,028,674) are fed continuously into a stirred autoclave of the type disclosed in U.S. Patent Number 2,897,183, together with an initiator. The rate of addition will depend on variables such as the polymerization temperature, pressure, alkyl acrylate monomer employed, and concentration of the monomer in the reaction mixture needed to achieve the target composition of the copolymer. In some cases, it may be desirable to use a telogen such as propane, to control the molecular weight. The reaction mixture is continuously removed from the autoclave. After the reaction mixture leaves the reaction vessel, the copolymer is separated from the unreacted monomers and solvent (if solvent was used) by conventional means, e.g., vaporizing the nonpolymerized materials and solvent under reduced pressure and at an elevated temperature.

Tubular reactor produced ethylene/alkyl acrylate copolymer can be distinguished from the more conventional autoclave produced ethylene/alkyl acrylate as generally known in the art. Thus the term or phrase "tubular reactor produced" ethylene/alkyl acrylate copolymer, for purposes of this invention, denotes an ethylene copolymer produced at high pressure and elevated temperature in a tubular reactor or the like, wherein the inherent consequences of dissimilar reaction kinetics for the respective ethylene and alkyl acrylate comonomers is alleviated or partially compensated by the intentional introduction of the monomers along the reaction flow path within the tubular reactor. As generally recognized in the art, such a tubular reactor copolymerization technique will produce a copolymer having a greater relative degree of heterogeneity along the polymer backbone (a more blocky distribution of comonomers), will tend to reduce the presence of long chain branching and will produce a copolymer characterized by a higher melting point than one produced at the same comonomer ratio in a high pressure stirred autoclave reactor. Tubular reactor produced ethylene/alkyl acrylate copolymers are generally stiffer and more elastic than autoclave produced ethylene/alkyl acrylate copolymers.

Tubular reactor produced ethylene/alkyl acrylate copolymers of this nature are commercially available from E. I. du Pont de Nemours & Co., Wilmington, Delaware.

The actual manufacturing of the tubular reactor ethylene/alkyl acrylate copolymers as previously stated is preferably in a high pressure, tubular reactor at elevated temperature with additional introduction of reactant comonomer along the tube and not merely manufactured in a stirred high-temperature and high-pressure autoclave type reactor. However, it should be appreciated that similar ethylene/alkyl acrylate copolymeric material can be produced in a series of autoclave reactors
wherein comonomer replacement is achieved by multiple zone introduction of reactant comonomer as taught in U.S. Patent Numbers 3,350,372; 3,756,996; and 5,532,066, and as such these high melting point materials should be considered equivalent for purposes of this invention.

To further illustrate and characterize the tubular reactor produced ethylene/alkyl acrylate copolymer relative to conventional autoclave produced copolymer, the following list of commercially available ethylene/methyl acrylate copolymers with associated melting point data show that tubular EMA resins have considerably higher melting points versus autoclave EMA's due to a very different MA distribution along polymer chains:

Autoclave produced copolymers

EMA-A1 (21.5 wt% MA) mp = 76 °C

EMA-A2 (24 wt% MA) mp = 69 °C

EMA-A3 (20 wt% MA) mp = 80 °C

EMA-A4 (24wt% MA) mp = 73 °C.

Tubular reactor produced copolymers

EMA-T1 (25 wt% MA) mp = 88 °C

EMA-T2 (20 wt% MA) mp = 95 °C.

For additional discussion regarding the differences between tubular reactor produced and autoclave produced ethylene/alkyl acrylate copolymers, see Richard T. Chou, Mimi Y. Keating and Lester J. Hughes, "High Flexibility EMA made from High Pressure Tubular Process", Annual Technical Conference - Society of Plastics Engineers (2002), 60th(Vol. 2), 1832-1836. CODEN: ACPED4 ISSN:0272-5223; AN 2002:572809; CAPLUS.

Ethylene/alkyl acrylate copolymers suitable for use in this invention are available from DuPont. See Table A for specific examples of tubular reactor produced ethylene/alkyl acrylate copolymers available from DuPont.

**Table A**

| Ethylene Alkyl Acrylate Copolymer | Alkyl acrylate wt% | Melt Flow (g/10min) |
|---|---|---|
| EMA | 25 | 0.4 |
| EMA | 25 | 0.6 |
| EMA | 9 | 2 |
| EMA | 14 | 2 |
| EMA | 18 | 2 |
| EMA | 24 | 2 |
| EMA | 9 | 6 |
| EMA | 20 | 8 |
| EMA | 13 | 9 |
| EEA | 12 | 1 |
| EEA | 16 | 1 |
| EEA | 15 | 6 |
| EEA | 15 | 7 |
| EBA | 7 | 1.1 |
| EBA | 7 | 1.1 |
| EBA | 17 | 1.5 |
| EBA | 17 | 1.8 |
| EBA | 27 | 4 |
| EBA | 17 | 7 |

The ethylene/alkyl acrylate copolymers useful in the present invention can vary significantly in molecular weight as witnessed by EMA having a melt index numerically in terms of a fraction up to about ten. The specific selection of the grade of ethylene/alkyl acrylate copolymer component(s) to be used to modify polypropylene will be influenced by balancing factors such as melt indices of the modifier and the polypropylene, draw temperature related to the respective softening points of the ethylene/alkyl acrylate copolymer and the polypropylene, and the draw profile (draw rate and draw ratio) contemplated. Other factors to be considered in the selection of the ethylene/alkyl acrylate copolymer include increased elastic recovery associated with higher relative molecular weight copolymer (such as an E/25 weight % MA with a 0.7 MI) and the pragmatic ability to more easily blend with fillers (see below) with a relatively lower molecular copolymer (such as an E/20 weight % MA with an 8 MI).

Compositions of ethylene/alkyl acrylate copolymers and polypropylene useful in this invention may be prepared by dry blending, pellet blending, melt blending, by extruding a mixture of the various constituents, and other mixing processes known in the art.

The compositions useful in this invention may further comprise fillers such as calcium carbonate (CaCO₃), in quantities that may be up to 30 to 40 weight %, of a tape composition. For example, from 0.01 to 20 weight %, from 0.1 to 15 weight %, from about 2 to about 10 weight % CaCO₃ may be present in some slit film tapes. The ethylene/alkyl acrylate copolymers as described herein provide enhanced compatibility between the polypropylene base resin and optional filler. The enhanced compatibility may provide reduced tendency of "dusting" caused by separation of the filler and the polypropylene resin, lower CaCO₃ particulates in the air during processing operations, and reduced wear on weaving or knitting equipment. Use of ethylene/alkyl acrylate copolymer modifiers as described herein may also provide for higher filler loading.

The compositions useful in this invention may further comprise other additives such as delustrants such as TiO₂, UV stabilizers, pigments, etc. These additives are well known in the art of films, slit film fibers and melt spun fibers. These conventional ingredients may be present in the compositions according to this invention, from 0.01 to 20 weight %, preferably from 0.1 to 15 weight %.

The incorporation of such conventional ingredients into the compositions comprising polypropylene modified with ethylene/alkyl acrylate copolymer can be carried out by any known process. This incorporation can be carried out, for example, by dry blending, by extruding a mixture of the various constituents, by the conventional masterbatch technique, or the like. A typical masterbatch may comprise from 75 to 90 weight % of CaCO₃. Of note is the use of a masterbatch comprising CaCO₃ and the ethylene/alkyl acrylate copolymer modifier.

The thermoplastic compositions described herein are suitable for preparation of films and fibers by extrusion processing.

Films of this invention, from which slit film tapes and fibers may be formed, can be made by virtually any method of film forming known to those skilled in this art. As such, the film and film structures can be typically cast, extruded, co-extruded and the like including orientation (either uniaxially or biaxially) by various methodologies (e.g., blown film, mechanical stretching or the like). It should be appreciated that various additives as generally practiced in the art can be present in the respective film layers including the presence of tie layers and the like, provided their presence does not substantially alter the properties of the film or film structure. Thus, it is contemplated that various additives such as antioxidants and thermal stabilizers, ultraviolet (UV) light stabilizers, pigments and dyes, fillers, delustrants, anti-slip agents, plasticizers, other processing aids, and the like may be advantageously employed.

In one embodiment, the film is formed by an extrusion process that causes the polymer-chains in the film to be generally aligned in the direction of extrusion. Linear polymers, after being highly oriented uniaxially possess considerable strength in the orientation direction, but less strength in the transverse direction. This alignment can add strength to the film in the direction of extrusion, which corresponds to the length dimension of the slit film yarns. Alternatively, the film may be formed through a blowing process known to those skilled in this art.

This invention provides a film prepared from a composition comprising polypropylene and ethylene/alkyl acrylate copolymers. The film can be oriented in a uniaxial direction (e.g. machine direction), or oriented in a biaxial direction (e.g. machine direction and transverse direction).

The films are useful in a wide variety of packaging applications including shrink film. As indicated above, the films are also useful for preparing slit film tapes and fibers.

Preferred films of this invention include:

Preferred 1. The film wherein said alkyl acrylate is present in said ethylene/alkyl acrylate copolymer in a range from about 5 to about 30 weight %.

Preferred 2. The film of Preferred 1 wherein said alkyl acrylate is present in said ethylene/ alkyl acrylate copolymer in a range from about 10 to about 25 weight %.

Preferred 3. The film of Preferred 2 wherein said alkyl acrylate is selected from the group consisting of methyl acrylate, ethyl acrylate and butyl acrylate.

Preferred 4. The film of Preferred 3 wherein said alkyl acrylate is methyl acrylate.

Preferred 5. The film of any of Preferred 1 through Preferred 4 wherein component (b) is present in an amount from 2 to 30 weight %, alternatively from 2 to 20 weight %, alternatively from 2 to 10 weight % of the total composition.

Preferred 6. The film of any of Preferred 1 through Preferred 5 further comprising

(c) from 0.01 to 40 weight % of at least one additional component selected from the group consisting of fillers, delustrants, UV stabilizers, pigments and other additives.

Preferred 7. The film of Preferred 6 wherein component (c) is present in an amount between 0.1 and 15 weight %.

Preferred 8. The film of any of Preferred 1 through Preferred 7 that is prepared by extrusion of said composition into a cooling water bath for quenching.

Preferred 9. The film of any of Preferred 1 through Preferred 7 that is prepared by extrusion of said composition onto chilled rolls for quenching.

Preferred 10. The film of any of Preferred 1 through Preferred 7 that is prepared by extrusion of said composition through an annular die into a tubular blown film that is air-quenched.

Preferred 11. The film of any of Preferred 1 through Preferred 10 wherein said composition comprises a tubular reactor produced ethylene/ alkyl acrylate copolymer.

This invention also provides a slit film tape prepared from films of this invention. Preferred tapes are those prepared from the preferred films above.

This invention also provides a fiber prepared by hot-drawing and annealing said slit film tape prepared from said film. Preferred fibers are those prepared from tapes prepared from the preferred films above.

This invention also provides processes for preparing slit film fibers. Preferred processes are those utilizing the preferred films above.

As indicated, the slit film fibers are formed of a polymeric material that is formed into a film, slit into tapes and hot-drawn.

Woven or knitted textiles can be prepared from slit film fibers as described above. Preferred woven or knitted textiles are prepared from the preferred fibers above.

Processes to manufacture slit film fibers based on polypropylene polymers by slitting films extruded from compositions comprising such polymers are well known. Common usages for which these slit film monofilament fibers are intended include rope and string manufacture, fibers for synthetic lawns, woven fabric for sacking and, in particular, heavy-duty sack construction, primary and secondary carpet backing, geotextiles, agrotextiles, industrial fabric, strapping, belting, apparel, diapers, netting, woven containers, and the like.

The manufacture of the slit film fiber itself from the compositions described above can be carried out according to any known methods. It is possible, for example, to manufacture a primary film by extruding the said compositions using so-called "blown film" or "flat die" methods. A blown film is prepared by extruding the polymeric composition through an annular die and expanding the resulting tubular film with an air current to provide a blown film. Cast flat films are prepared by extruding the composition through a flat die. The film leaving the die is cooled by at least one roll containing internally circulating fluid (a chill roll) or by a water bath to provide a cast film. A film of this invention would have a width, for example, of about 60 cm (two feet). This primary film is then slit into slit film tapes that are drawn into monofilament fibers before being reeled up.

The slit film tapes can be produced with a slitting apparatus which comprises a support frame; a plurality of substantially planar cutting blades, each of which includes opposed cutting edges and opposed ends; a mounting structure for mounting the cutting blades to the support frame; and a feed roll attached to the support frame and configured to feed film in a downstream direction over the exposed cutting edges of the blades. The mounting structure is configured to mount the cutting blades in substantially aligned, parallel and spaced apart relationship, wherein the blades are mounted such that each blade has one of its cutting edges exposed for cutting, and wherein the cutting edges of adjacent blades are spaced apart from each other between about 6 mm and 8 mm.

After slitting the film into tapes as described above, the drawing operation would be done over a span of from 3 to 6 meters (ten to twenty feet) in an oven heated to a temperature effective to soften the film so as to facilitate the drawing operation. What typically takes place is that the film, at the beginning of the path through the oven is cold and is progressively heated and softened as it passes through the oven. Necking takes place at a neckline that is at a certain distance from the entrance to the oven. The location of the necking zone depends on a number of factors including the rate of stretching, the temperature of the oven, and the nature and thickness of the film material. A typical prestretched tape has a thickness about 120 microns and a width of about 6 mm to 8 mm. After stretching, the final tape has a thickness of about 30 to 50 microns and a width of about 2.5 mm to 3 mm. Tapes can be made wider or narrower for certain purposes. For example, fibers for reduced end count woven fabric can have a final width of from about 4 mm to about 6 mm; polypropylene strapping can have a final width of about 10 mm to 15 mm.

The drawing ratio will generally be greater than 3, e.g. in the range of greater than 3 to about 16:1 and a typical drawing ratio for some polymers would be from about 4:1 to about 10:1. The drawing ratio for woven tape is preferably from about 5:1 to about 8:1. The drawing ratio for wider strapping tape is typically from about 10:1 to about 15:1. The distance over which longitudinal drawing takes place will vary with the technique used. In the short-draw the stretching takes place over a distance of a few inches, other techniques involve much greater distances. After hot-drawing, the resulting monofilament fibers for woven tape would typically have a denier of from about 700 to about 1700. Polypropylene strapping would have a denier of from about 3000 to about 6000.

The mechanical properties such as tenacity, tensile breaking load, elongation at break and denier of the tapes of this invention can be balanced by adjusting various parameters including

• resin formulation design (base resin, level and types of additives such as CaCO₃, UV stabilizers, pigment added);

• amount and type of ethylene/alkyl acrylate used;

**•** film and tape processing equipment (quenching, slitting, drawing and annealing configuration); and

**•** processing conditions (extruder screw configuration, temperature profile and polymer throughput, stretch and annealing temperatures and profiles, line speed etc).

Typically, a manufacturing facility for preparing slit film yarns will have a limited ability to modify equipment and processing conditions. Therefore, the ethylene/alkyl acrylate modification of the polypropylene resin of this invention can provide significant improvement in mechanical properties of the films, tapes and yarns prepared there from.

As noted above, fibers may also be prepared directly from extrusion processes including centrifugal spinning, melt-spinning, spunbonding and melt-blowing.

In centrifugal spinning, fibers are formed as a polymer melt is accelerated from a rapidly rotating source. Molten material from a furnace is transferred into a rotating spinner, and the fibers are produced as centrifugal force extrudes the material through small holes in the side of the spinning device.

In melt spinning, the fiber-forming substance is melted for extrusion through the spinneret and then directly solidified by cooling. Melt spun fibers can be extruded from the spinneret in different cross-sectional shapes (round, trilobal, pentalobal, octalobal, and others). In-line drawing is effected by wrapping the moving thread line around sets of rotating rolls running at controlled temperature and speeds. Depending on the specific melt spinning process and subsequent processing steps, product can be collected as monofilaments, yarn, tow or nonwoven (e.g. spunbond). See Fibers from Synthetic Polymers, Rowland Hill, ed., Elsevier Publishing Co., NY, 1953 for a general reference regarding melt spun fibers.

Spunbonding is the direct laydown of nonwoven webs from fibers as they are melt-spun. Continuous filaments are extruded through a spinneret, accelerated (via rolls or jets) and laid down onto a moving belt to form a nonwoven sheet. Bonding occurs at molten fiber crossover points.

Meltblowing is another direct laydown process in which fibers are extruded through a die tip, attenuated (and fractured) by hot, high velocity air, and deposited onto a moving belt or screen to form a web of fine (low denier) fibers.

Both spunbond (S) and meltblown (M) webs, after being formed, can be further bonded and/or patterned by calendering. Multiple layered nonwovens (e.g. SMS, SMMS, SMMMS) can also be prepared from fibers of this invention.

This invention further provides a melt-spun fiber prepared from a composition as described above. Preferred melt-spun fibers include:

Preferred A. The fiber wherein said alkyl acrylate is present in said ethylene/alkyl acrylate copolymer in a range from about 5 to about 30 weight %.

Preferred B. The fiber of Preferred A wherein said alkyl acrylate is present in said ethylene/alkyl acrylate copolymer in a range from about 10 to about 25 weight %.

Preferred C. The fiber of Preferred B wherein said alkyl acrylate is selected from the group consisting of methyl acrylate, ethyl acrylate and butyl acrylate.

Preferred D. The fiber of Preferred C wherein said alkyl acrylate is methyl acrylate.

Preferred E. The fiber of any of Preferred A through Preferred D wherein component (b) is present in an amount from 2 to 10 weight %.

Preferred F. The fiber of any of Preferred A through Preferred E further comprising

(c) from 0.01 to 15 weight % of at least one additional component selected from the group consisting of fillers, delustrants, UV stabilizers, pigments and other additives.

Preferred G. The fiber of Preferred F wherein component (c) is present in an amount between 0.1 and 5 weight %.

Preferred H. The fiber of any of Preferred A through Preferred G wherein said composition comprises a tubular reactor produced ethylene/ alkyl acrylate copolymer.

Nonwoven textiles can be prepared from melt-spun fibers as described above. Preferred nonwoven textiles are prepared from the preferred fibers above.

Woven or knitted textiles can be prepared from melt-spun fibers as described above. Preferred woven or knitted textiles are prepared from the preferred fibers above.

Oriented films are used in a wide variety of packaging applications. As described above, films of this invention can be also used to prepare slit tape fibers.

Fibers prepared as described herein, including slit tape fibers are useful for preparing cords, twines or ropes. A number of fibers are joined together by, for example, twisting, braiding, interlacing and the like to form a cord. Twines, in general, contain a lower number of fibers and are smaller in diameter than ropes. These cords, twines or ropes may be roughly circular or flattened in cross section. Cords and twines can be used for shoelaces, straps for bags, briefcases and the like, and can be used in packaging applications. Ropes can be used in a wide variety of industrial and marine applications. Cords, twines and ropes may also be further interlaced (such as by knitting) to prepare nets having a relatively open structure, such as fishing nets, cargo nets and the like.

Slit tape fibers of this invention can be used as monofilament fibers for carpet tufting, synthetic lawns, matting and the like. They can also be used as strapping.

Woven or knitted textiles can be prepared from the slit tape fibers or melt-spun fibers as described above. In general, woven fabrics may have a tighter construction than knitted fabrics. Polypropylene yarns prepared as described herein can be woven into fabrics used in applications such as filters, tarpaulins, awnings, canopies, banners, construction (e.g. roofing) membranes, machine belts, liners for luggage or packaging, heavy duty sacking, carpet backing, upholstery, apparel, agrotextiles (for use in seed control, weed control, gardening, greenhouses and silage) and geotextiles (for erosion control and soil conservation). Knitted fabrics can be used for sacking for use in carrying bulky materials such as groceries, firewood and the like; and construction, industrial and fishing netting.

Woven fabrics using the modified polypropylene compositions as described herein have a lower slip tendency, particularly for heavy duty sacks.

Nonwoven fabrics of this invention can be used in diapers and other items used for personal hygiene such as adult incontinence and feminine hygiene products, medical apparel such as hats, gowns, booties, personal protective equipment including masks and the like, hygiene protective furnishings such as drapes, covers, blankets and the like, packaging, durable paper, wipes, wraps, banners, carpet backing, filtering, geotextiles, agrotextiles, upholstery, apparel, filters, liners, or construction wrap for heat and moisture control in buildings.

For carpet backings, the shrink of the textile is important (for example, shrinkage less than 2.5% at 45 °C. is desirable). Woven and nonwoven carpet backings are typically used as a primary backing for carpets to provide strength, dimensional stability and form to the carpet. They can be prepared from slit tape fibers or spunbonded fabrics of this invention.

Secondary carpet backings can be used to provide a substrate to which the carpet yarns are secured. They can be prepared from nonwoven materials. Melt spun fibers of this invention are useful for preparing nonwoven substrates useful as secondary carpet backing.

Geotextiles can be used in roads under the gravel and paving layers to improve road quality. Geotextile fabrics are typically manufactured by weaving PP tapes having approximately 2.5 mm width. Geotextiles are also prepared from spun bonded nonwoven material derived from melt-spun fibers. Shrinkage requirements for geotextiles are not as stringent as those for carpet backings. However, resistance to perforation is extremely important for geotextiles.

The following Examples are merely illustrative, and are not to be construed as limiting the scope of the invention described and/or claimed herein.

### EXAMPLES

Slit Film Tapes

Trial 1

The trial was conducted on an extrusion casting line using the resin formulations indicated below. The film was cast onto a chilled (quench) roll. It was then slit into tapes and subsequently stretched 6 or 7X into 5 mm tapes in an annealing oven. The stretching and annealing of tapes were carried out simultaneously. Samples were taken and tested for tensile strength after the manufacturing procedure had been running for 15 minutes. A 250 mm length of 5.0 mm wide tape was stretched on an Universal Tensile Test Machine with a rate of cross head separation of 200 mm/min. The results are summarized in Table 2.

Materials Used

PP-1: Polypropylene homopolymer with a melt index (MI) of 3 g/10min (ASTM D-1238, 230 °C using a 2.16 Kg mass) available from Titan Petrochemical (M) Sdn Bhd.

EMA-1: Ethylene/alkyl acrylate copolymer with 24 weight % methyl acrylate with MI of 2 g/10min (ASTM D-1238, 190 °C using a 2.16 Kg mass).

Calcium Carbonate as filler.

Resin formulations:

Comparative Example C1: PP-1 (99%) + CaCO₃ (1%)

Example 2: PP-1 (89%) + CaCO₃ (1%) + EMA-1 (10%)

Example 3: PP-1 (94%) + CaCO₃ (1%) + EMA-1 (5%)

**Table 2**

| | Comparative Example C1 | Example 2 | Example 2 | Example 3 |
|---|---|---|---|---|
| Stretch ratio | 6 | 6.12 | 7.05 | 6 |
| Denier | -- | 963 | 1178 | 1058 |
| Tensile Breaking | -- | | | |
| Load (Kgf) | | 5.02 | 6.05 | 5.24 |
| Tenacity (g/denier) | -- | 5.212 | 5.136 | 4.953 |
| Elongation at break (%) | -- | 31 | 27 | 32 |

The run using Comparative Example C1 (0% EMA-1) was discontinued since processability was poor and unstable under the conditions used for Examples 2 and 3 (10% and 5% EMA-1). Fibrillation of tapes prepared from Comparative Example 1 was encountered during the trial even at a stretch ratio of 6.

Under normal production conditions with pure PP formulation (see Comparative Example 1), the cast film is unstable at high extruder throughput (for example, extruder screw speeds above 180 rpm). The machine throughput is low and hence the line productivity is also reduced. Furthermore, if draw ratio is increased beyond about 6, fibrillation of tapes starts to occur and the width of the tapes is very inconsistent.

By incorporating 5 to 10% of EMA resin (for example EMA-1) into the PP formulation, the production can be run very smoothly at high throughput and the cast film from the extruder is very stable. The new formulation has better processability and improved melt strength.

The slit tapes can be stretched to 6 and 7 times with no tendency to fibrillate. The mechanical properties of the oriented tapes such as tenacity, tensile breaking load and elongation at break are satisfactory.

Trial 2

The trial was conducted on an extrusion casting line. The film quenched in a chilled water bath. It was then slit into tapes and subsequently stretched at least 6X into 3 mm tapes in an annealing oven. The stretching and annealing of tapes were carried out simultaneously. Samples were taken and tested for tensile strength after the manufacturing procedure had been running for 15 minutes. A 250 mm length of 3.0 mm wide tape was stretched on a Universal Tensile Test Machine with a rate of cross head separation of 200 mm/min. The results are summarized in Table 3.

Materials Used

PP-2: polypropylene homopolymer resin with a melt index (MI) of 3 g/10min(ASTM D-1238, 230°C / 2.16Kg), available as PD855 from Titan Petrochemical (M) Sdn Bhd.

Ethylene/alkyl acrylate copolymer with 24, weight% methyl acrylate (EMA-1) with MI of 2 g/10min (ASTM D-1238, 190°C / 2.16Kg).

White master batch, a colorant/filler comprising CaCO₃.

Resin formulations

Comparative Examples C4 and C6: PP-2 (95%) + white master batch (5%)

Examples 5 and 7 through 9: PP-2 (90%) + white master batch (5%) + EMA-1 (5%)

**Table 3**

| | Comparative Example C4 | Example 5 | Comparative Example C6 | Example 7 | Example 8 | Example 9 |
|---|---|---|---|---|---|---|
| Stretch ratio | 6 | 6 | 6 | 6 | 8 | 7 |
| Denier | 886 | 858 | 1075 | 1096 | 1016 | 736 |
| Tensile | | | | | | |
| Breaking | 4.8 | 5.1 | 5.6 | 5.8 | 6.7 | 4.6 |
| Load (Kgf) | | | | | | |
| Tenacity (g/denier) | 5.4 | 6.0 | 5.2 | 5.3 | 6.8 | 6.2 |
| Elongation at break (%) | 31 | 33 | 30 | 41 | 26 | 28 |

These trial results confirmed that the addition of 5% of ethylene/alkyl acrylate copolymer in the PP has improved the mechanical properties such as tensile breaking load, elongation at break and tenacity of oriented PP tapes.

Comparing tapes with similar average deniers (Comparative Example C4 and Example 5, Comparative Example C6 and Example 7), tapes produced from PP with 5% EMA incorporated have shown an improvement in the average tensile breaking load, average elongation at break and average tenacity than standard PP tapes stretched under a similar stretch ratio.

The improvement in the average tensile breaking and average tenacity of the modified PP tapes (Example 8) under a higher stretch ratio (8X) was even more significant as compared to standard (Comparative Example C6) or modified PP tapes (Example 7) produced at the standard stretch ratio (6X).

Modified PP tapes with a lower average denier (Example 5) have tensile properties nearly as high as standard PP tapes with a higher average denier (Comparative Example C6). Modified PP low denier tapes (Example 9) prepared with high stretch ratio (7X) have similar average tensile breaking load and elongation at break but much higher tenacity than the standard PP tapes (Comparative Example C4).

Trial 3

In these trials the fibers were made in a manner suitable for incorporation into woven fabric suitable for geotextiles.

PP-3: A base polypropylene material is obtained by blending polypropylene (Amoco GA 02, MFI: 1.8) with 2 weight percent of a color additive (Ampacet Noir 190826) and 3.5 weight percent of a CaCO₃ filler (Multibase ME 50004), designated Comparative Example C10. The base material PP-3 is further blended with 3 weight percent of a polyolefin copolymer (Booster PO) to prepare Comparative Example C11. The base material PP-3 is blended with 5 weight percent or 10 weight percent of EMA-1 to prepare Examples 12 and 13.

Processing conditions

Extrusion temperature: 255 °C

Oven (stretching): 163 °C

Chill roll: 27 °C

Input: 270-300 kg/hr

Cast film width: 1250 mm

Thickness of the cast film: 175-180 µm

Tape width before stretch: 6 mm

Tape width after stretch: approximately 2.5 mm

Processing started with 5% EMA-1 and a stretch ratio of 7. The stretch ratio was then increased to 7.4 and 7.8 to improve the strength.

**Table 4**

| | Stretch Ratio | TEX [g/km] | Strength [cN]/TEX | Elongation |
|---|---|---|---|---|
| C10 | 6 | 172 | 42 | 30 |
| C11 | 7 | 144 | 47-49 | 29 |
| 12 | 7 | 140 | 45 | 29.5 |
| 12 | 7.4 | 142 | 46 | 30.4 |
| 12 | 7.8 | 142 | 49.5 | 30 |
| 12 | 7.8 | 142 | 48 | 29.5 |
| 12 | 7.8 | 148 | 49 | 30.8 |
| 12 | 7.8 | 142¹ | 48.8 | 28.8 |
| 12 | 7.8 | 143¹ | 46.3 | 27.4 |
| 13 | 7.8 | 143 | 48.4 | 27.5 |
| 13 | 7.8 | 143.6 | 46.2 | 28.1 |
| 13 | 7.8 | 142.4 | 48 | 28.5 |
| 13 | 7.8 | 143.8 | 47 | 27.3 |
| 13 | 7.8 | 143.2 | 49 | 28.4 |
| 13 | 7.8 | 140 | 49 | 28 |
| 13 | 8 | 142.8 | 50.7 | 32.5 |
| 13 | 8 | 141.4 | 47.8 | 30.2 |
| 13 | 8.2 | 138 | 53.5 | 34.8 |
| 13 | 8.2 | 138.6 | 49.5 | 31.7 |

| | | | | |
|---|---|---|---|---|
| Notes: 1. After 2 hours. 2. Adjustment of stretch rolls. 3. Oven temperature of 160 °C. | | | | |

Compared to polypropylene (Example C10), tapes prepared from a composition of this invention demonstrated a higher strength and similar elongation at a higher stretch ratio. Compared to polypropylene plus 3 weight % Booster PO (Example C11), tapes prepared from a composition of this invention demonstrated slightly higher elongation and strength at a higher stretch ratio.

In addition, using an ethylene/alkyl acrylate modified composition as described herein allowed for slightly lower energy consumption and slightly lower pressure at the extruder.

By incorporating ethylene/alkyl acrylate copolymers in PP formulations, one can produce

• Highly drawn, low denier tapes with very high tensile breaking load and tenacity without significant loss of elongation; or

• Highly drawn, high denier (wide but thin) tapes with good mechanical properties for cost saving in woven fiber bag or lamination substrate construction.

Spun Fibers

Trial 4

The purpose of this trial was to compare the spinning performance (maximum drawability) and physical properties of PP yarns vs. PP/EMA blend yarns. Yarns were drawn on the spinning machine between a pair of heated rolls, wound up, and tested. The PP/EMA blends were melt blended prior to spinning.

Materials Used

Comparative Example C14: 100% PP-4 (Profax^{®} 6323)

Example 15: 95%/5% blend of PP-4 with EMA-1

Example 16: 90%/10% blend of PP-4 with EMA-1

Spinning conditions

Block temperature 245 °C

Spinneret 10 holes, 0.015 inch x 0.060 inch

Feed Roll Temperature 60 °C

Feed Roll Speed 500 yards per minute (ypm)

Draw Roll Temp 80 °C

Draw Roll Speed was variable to determine maximum draw (for example, 1500 ypm was used to obtain a 3X draw).

**Table 5**

| | | | Tenacity (gpd) | | Elongation (%) | | Modulus (gpd) | |
|---|---|---|---|---|---|---|---|---|
| Ex. | Draw Ratio | Yarn Denier | Ave | SD | Ave. | SD | Ave. | SD |
| C14 | 3.0 | 89.8 | 3.23 | 0.11 | 103.38 | 9.78 | 34.4 | 2.5 |
| C14 | 3.8 | 72.3 | 4.15 | 0.24 | 66.65 | 6.59 | 34.3 | 2.2 |
| 15 | 3.0 | 90.0 | 3.72 | 0.16 | 116.51 | 6.36 | 26.3 | 2.4 |
| 15 | 4.0 | 67.7 | 4.64 | 0.27 | 60.82 | 7.23 | 41.4 | 4.0 |
| 16 | 3.0 | 89.8 | 3.29 | 0.24 | 119.03 | 10.81 | 21.1 | 3.2 |
| 16 | 4.0 | 68.4 | 4.47 | 0.46 | 63.14 | 5.84 | 38.7 | 7.1 |

Addition of an ethylene/alkyl acrylate copolymer increases the residual elongation and decreases initial modulus in single-stage-drawn melt spun polypropylene fibers (indicating better drawability). Addition also increases the maximum spinning draw ratio leading to desirably increased strength and/or decreased denier.

Trials 5 and 6

Two full-day spinning trials were carried out. The first trial was done using blends made on a twin-screw mixing unit (melt blends). The second trial was done using blends of the polymers mixed in a tumble blender (dry blends). Blends with 5, 10 and 15 weight % of EMA-1 were prepared.

Melt blends prepared on twin-screw extruder and run during the first trial:

Comparative Example C17: 100% PP-5 (polypropylene with MFI of 4).

Example 18: 95%/5% blend of PP-5 with EMA-1.

Example 19: 90%/10% blend of PP-5 with EMA-1.

Dry blends prepared with a tumble blender and run during the second trial:

Example 20: 95%/5% blend of PP-5 with EMA-1.

Example 21: 85%/15% blend of PP-5 with EMA-1.

Spinning conditions for both trials:

Block temperature 240 °C

Melt temperature 240 °C

Spinneret 600 holes

Feed Roll Temperature 137°C

Feed Roll Speed 600 rpm

Draw Roll Temperature 23 °C

Draw Roll Speed varied depending on stretching ratio (S.R.) desired (for example, 1800 rpm for S.R. of 3.0).

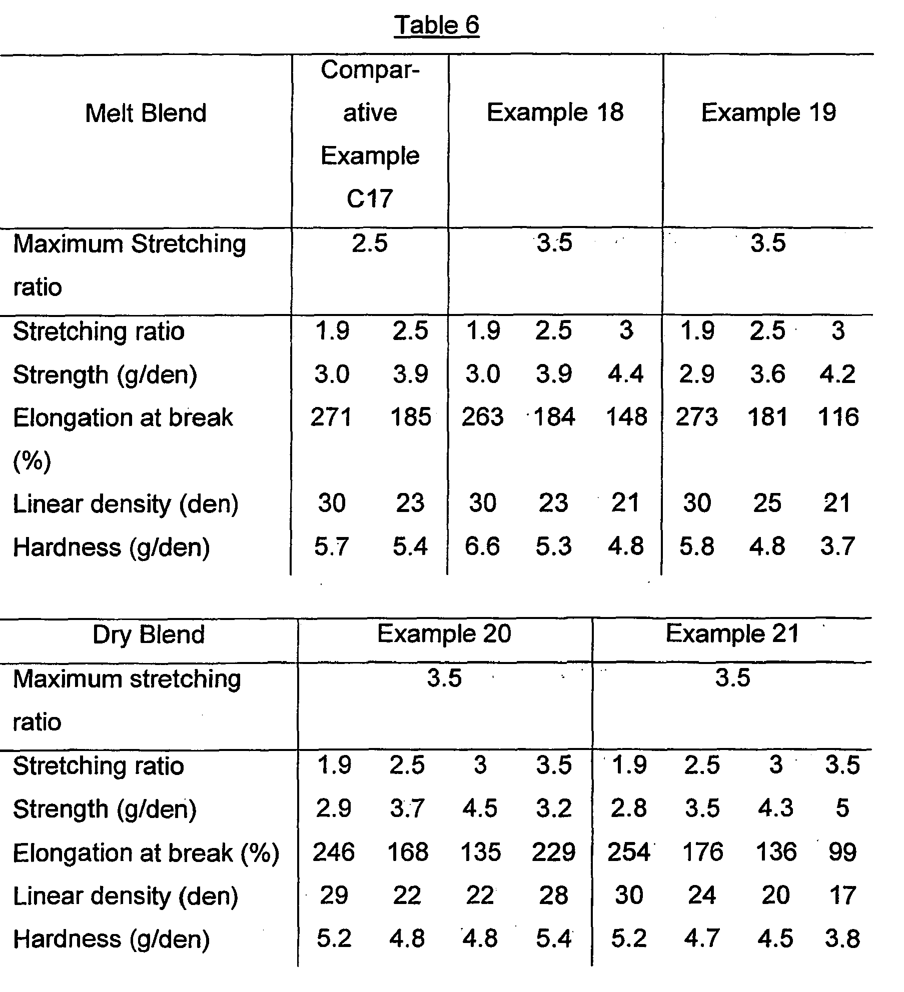

The blends of PP and EMA-1 spun well. A significant improvement in draw ratio could be achieved with consequent tenacity increase. These trials have shown a higher stretchability (without breaks) of PP when an ethylene/alkyl acrylate copolymer is added. If for 100 % PP the maximum stretching ratio was 2.5, adding 5, 10 or 15 weight % EMA-1 raised the maximum stretching ratio to 3.5. One could also see an increase in tensile strength with increased S.R. although the elongation at break is decreased.

Trial 7

The purpose of this trial was to evaluate stretchability of films prepared from unmodified and modified PP's on a tensile machine combined with an oven to be able to run the tests at elevated temperatures.

Materials used:

Comp. Example C22: 100 % PP-6 (Moplen T 30 S)

Comp. Example C23: 90 % PP-6 + 10 weight % Engage 8200 (a metallocene polyethylene).

Example 24: 95 % PP-6 + 5 weight % EMA-1

Example 25: 90 % PP-6 + 10 weight % EMA-1

We produced 0.5 mm thick dumbbell-shaped samples and measured their tensile properties at 100 °C. Above 100 °C, the samples did not break within the limits of the test equipment (maximum of 1500 %). The results reported in Table 7 are the average values for 20 samples per formulation, tested at 100 °C.

**Table 7**

| Example | C22 | C23 | 24 | 25 |
|---|---|---|---|---|
| Tensile Strength (MPa) | 26.7 | 19.9 | 21.1 | 22.5 |
| Elongation at break (%) | 1366 | 1286 | 1371 | 1440 |

As one can see from the above table, 10 % EMA-1 shows a 5 % increase in elongation at break vs. 100 % PP.

Biaxially oriented films

Trial 8

Samples were prepared by melt-blending polypropylene and the ethylene/alkyl acrylate copolymer and then forming a cast film by extrusion. The line used to produce the biaxially oriented films had clips systems to allow for stretching in both machine and transverse directions.

Comparative Example C26: 100 % PP-7 (Basell HP 1078 polypropylene homopolymer having an MFI of 2)

Example 27: 95 weight PP-7 + 5 weight EMA-1

Example 28: 90 weight % PP-7 + 10 weight EMA-1

The stretching conditions were as follows:

Preheating in stretching unit: 30 or 40 seconds at 145 °C

Clip temperature: 82, 88, 100 or 105 °C

Stretching speed: 400 %/sec

Annealing temperature after stretching: 145 °C

| Ex. | Stretch ratios | Clip Temp. | Preheat time | Tensile strength MD | Tensile strength TD | Elongation at break MD | Elongation at break TD |
|---|---|---|---|---|---|---|---|
| C26 | 6x6 | 100 | 40 | 175 | 164 | 89 | 72 |
| C26 | 6x6 | 100 | 40 | 169 | 168 | 91 | 85 |
| 27 | 6x6 | 100 | 40 | 164 | 178 | 88 | 99 |
| 27 | 6x6 | 100 | 40 | 176 | 184 | 89 | 75 |
| 28 | 6x6 | 100 | 40 | 160 | 152 | 98 | 106 |
| 28 | 6x6 | 100 | 40 | 161 | 177 | 88 | 87 |
| 28 | 6.5x6.5 | 100 | 40 | 177 | 176 | 76 | 83 |
| C26 | 5x9 | 100 | 40 | 128 | 226 | 182 | 53 |
| 27 | 5x9 | 100 | 40 | 125 | 232 | 180 | 34 |
| 28 | 5x9 | 100 | 40 | 133 | 239 | 143 | 47 |
| 27 | 5x9 | 88 | 40 | 122 | 294 | 151 | 37 |
| 27 | 5x9 | 100 | 30 | 144 | 257 | 191 | 49 |
| 27 | 5x9 | 82 | 30 | 114 | 326 | 251 | 36 |
| 28 | 7x7 | 105 | 40 | 179 | 175 | 89 | 86 |
| 28 | 7x7 | 105 | 40 | 189 | 188 | 83 | 77 |

In the other trials described above, stretchability of ethylene/alkyl acrylate modified polypropylene blends using stretching rolls gave higher stretchability than 100 % PP. In this trial, stretchability comparisons were difficult to make because the films were sometimes breaking at the clips, which were very small (high stress concentration) and with large spaces between them (around 10 cm). On industrial equipment, however, MD stretching is always done with rolls and not clips.

However, it can be observed that higher stretching of some of the samples based on PP modified with EMA-1 provides better tensile strength with similar or higher elongation at break than 100 % polypropylene.

For the 7x7 stretched films made with 10 % EMA-1, tensile strength (average between MD and TD) was found to be 8 % higher without loss in elongation at break vs. 100 % PP at 6x6 (maximum biaxial stretchability for PP).

For the 5x9 stretched films made with 5 % EMA-1, tensile strength (average between MD and TD) was found to be 24 % higher and elongation at break (average between MD and TD) 22 % higher vs. 100 % PP at same stretching ratio of 5x9.

Spunbonded fabric

Trial 9

The purpose of this trial was to evaluate the effect of adding an ethylene/alkyl acrylate copolymer to polypropylene to prepare a spunbonded fabric.

The spunbonded fabric was prepared using 2 extruders feeding a total of 68 spinning positions and laying the fibers onto a moving belt.

Comparative Example C29: 100 % polypropylene homopolymer PP-8 at a stretching ratio of 2.5:1.

Example 30: 95 weight % PP-8 + 5 weight % EMA-1 at a stretching ratio of 3:1.

Spinning conditions for the Example 30 fabric were:

Block temperature 240 °C

Melt temperature 240 °C

Feed Roll Temperature 137 °C

Feed Roll Speed 600 rpm

Draw Roll Temp 23 °C

Draw Roll Speed 1800 rpm

These trials have shown that Example 30 provided enhanced stretchability. The Example 30 was drawn at a 3:1 ratio, while the maximum achievable stretching ratio for Comparative Example C29 was 2.5:1. The finished fabric Example 30 has a significantly higher resistance to perforation than a standard PP nonwoven (Comparative Example C29) at the same basis weight.

## Claims

1. An oriented film prepared from a composition comprising:
(a) at least one polypropylene polymer selected from the group consisting of polypropylene homopolymers; random copolymers or block copolymers of polypropylene and ethylene; and random terpolymers or block terpolymers of polypropylene, ethylene and one other olefin; and
(b) from 1 to 30 weight % or, in increasing order of preference, 2 to 30 weight %, 2 to 20 weight %, or 2 to 10 weight % of at least one ethylene/alkyl acrylate copolymer, preferably a tubular reactor produced ethylene/alkyl acrylate copolymer; and optionally
(c) from 0.01 to 40 weight % or preferably 0.1 to 15 weight % of at least one additional component selected from the group consisting of fillers, delustrants, W stabilizers, pigments and other additives;
wherein the alkyl group of the alkyl acrylate has less than 6 carbon atoms; the alkyl acrylate is preferably present in the ethylene/alkyl acrylate copolymer in a range from about 5 to about 30 weight %, or preferably from about 10 to about 25 weight %; the alkyl acrylate is preferably methyl acrylate, ethyl acrylate, or butyl acrylate, or more preferably is methyl acrylate; and the film is prepared by drawing at a temperature below the melting point of the polypropylene polymer and at a draw ratio of greater than 3 or preferably of about 4:1 to about 10:1.

2. The oriented film of Claim 1 that is prepared by extrusion of said composition into a cooling water bath or onto chilled rolls for quenching, or
wherein said composition is extruded through an annular die to form a tubular blown film that is air-quenched.

3. A tape prepared by slitting an oriented film of Claim 1 or 2.

4. A woven textile, a heavy-duty sack, a geotextile, or an agrotextile comprising the split tape film of Claim 3.

5. A fiber prepared by hot-drawing and annealing the split film tape of Claim 3.

6. An oriented melt spun fiber, preferably an oriented monofilament, an oriented yarn, or oriented tow, prepared from the composition of claim 1,
wherein the fiber is drawn at a temperature below the melting point of the polypropylene polymer to a draw ratio of greater than 3.

7. A nonwoven textile prepared from a meft-spun fiber of Claim 6.

8. An article manufactured from the woven textile of Claim 4 or the fiber of claim 5 or the melt spun fiber of claim 6, said article selected from the group consisting of rope, string, cord, synthetic lawn, sacking, heavy-duty sack, primary and secondary carpet backing, geotextile, agrotextile, industrial fabric, strapping, belting, apparel, diaper, netting, container, filter, tarpaulin, awning, canopy, banner, roofing membrane, luggage liner, package, and upholstery.

9. A process for preparing an oriented fiber, film, or tape comprising
(1) preparing a composition according to claim 1;
(2) forming said composition into a film;
(3) optionally slitting the film into a tape;
(4) drawing the film or tape at a draw ratio greater than 3, preferably equal to or greater than 6, at a temperature below the melting point of the polypropylene polymer, to produce an oriented film or an oriented tape;;
(5) optionally annealing the oriented tape of step 4 to form an oriented fiber, and
(6) optionally producing fabric or textile from the oriented tape or from the oriented fiber.

10. The process of claim 9 further comprising the step of extruding the composition into a cooling water bath or onto chilled rolls for quenching, or wherein said composition is extruded through an annular die to form a tubular blown film that is air-quenched.

11. Use of a masterbatch comprising ethylene/alkyl acrylate copolymer modifier and one or more of fillers, delustrant, UV stabilizers and pigments, for the manufacture of a film according to any of claim 1 to 10.

12. The use of claim 11 wherein the masterbatch comprises from 75 to 90 weight % of calcium carbonate (CaCO₃) and 10 to 25 weight % of the ethylene/alkyl acrylate modifier.

## Patentansprüche

1. Orientierte Folie, hergestellt aus einer Zusammensetzung, die aufweist:
(a) mindestens ein Polypropylen-Polymer, ausgewählt aus der Gruppe, bestehend aus Polypropylen-Homopolymeren; Random-Copolymeren oder Blockcopolymeren von Polypropylen und Ethylen; und Random-Terpolymeren oder Block-Terpolymeren von Polypropylen, Ethylen und einem anderen Olefin; und
(b) von 1% bis 30 Gew.% oder, in ansteigender Reihenfolge der Präferenz, 2% bis 30 Gew.%, 2% bis 20 Gew.% oder 2% bis 10 Gew.% mindestens eines Ethylen/Alkylacrylat-Copolymers, bevorzugt ein in einem Röhrenreaktor erzeugtes Ethylen/Alkylacrylat-Copolymer; sowie wahlweise
(c) 0,1% bis 40 Gew.% oder bevorzugt 0,1% bis 15 Gew.% mindestens einer zusätzlichen Komponente, die ausgewählt ist aus der Gruppe, bestehend aus Füllstoffen, Mitteln zum Mattieren, UV-Stabilisiermitteln, Pigmenten und anderen Additiven;
wobei die Alkyl-Gruppe des Alkylacrylats weniger als 6 Kohlenstoffatome enthält; wobei das Alkylacrylat vorzugsweise in dem Ethylen/Alkylacrylat-Copolymer im Bereich von etwa 5% bis etwa 30 Gew.% oder bevorzugt etwa 10% bis etwa 25 Gew.% vorliegt, das Alkylacrylat bevorzugt Methylacrylat, Ethylacrylat oder Butylacrylat ist oder mehr bevorzugt Methylacrylat ist; und die Folie hergestellt wird durch Verstrecken bei einer Temperatur unterhalb des Schmelzpunktes des Polypropylen-Polymers bei einem Streckverhältnis das größer als 3 und bevorzugt etwa 4:1 bis etwa 10:1 ist.

2. Orientierte Folie nach Anspruch 1, hergestellt durch Extrusion der Zusammensetzung in ein kühlendes Wasserbad oder auf gekühlte Walzen zum Abschrecken, oder wobei die Zusammensetzung durch eine Ringdüse extrudiert wird, um eine schlauchförmige Blasfolie zu erzeugen, die einer Luftabschreckung unterzogen wird.

3. Band, hergestellt durch Aufschlitzen einer orientierten Folie nach Anspruch 1 oder 2.

4. Gewebtes textiles Material, hochbeanspruchbarer Sack, Geotextilie oder Agrotextilie, aufweisend die Spaltbandfolie nach Anspruch 3.

5. Faser, hergestellt durch Heißverstrecken und Wärmebehandeln der Spaltbandfolie nach Anspruch 3.

6. Orientierte, schmelzgesponnene Faser, bevorzugt ein orientiertes Monofilament, ein orientiertes Garn oder orientiertes Spinnkabel, hergestellt aus der Zusammensetzung nach Anspruch 1, wobei die Faser bei einer Temperatur unterhalb des Schmelzpunktes des Polypropylen-Polymers bis zu einem Streckverhältnis das größer als 3 ist verstreckt wird.

7. Textiler Vliesstoff, hergestellt aus einer schmelzgesponnenen Faser nach Anspruch 6.

8. Artikel, hergestellt aus einem gewebten textilen Material nach Anspruch 4 oder der Faser nach Anspruch 5 oder der schmelzgesponnenen Faser nach Anspruch 6, wobei der Artikel ausgewählt ist aus der Gruppe, bestehend aus Strang, Schnur, Cord, synthetischem Linon, Sackgewebe, hochbeanspruchbarem Sack, primärem und sekundärem Teppichgrundgewebe, Geotextil, Agrotextil, technischem Textil, Gurtstoff, Gürtelstoff, Bekleidung, Windel, Netz, Behälter, Filter, Wagentuch, Überdachung, Segeltuch, Fahne, Bedachung, Gepäckauskleidung, Verpackung und Polsterware.

9. Verfahren zum Herstellen von orientierter Faser, Folie oder Band, umfassend:
(1) Herstellen einer Zusammensetzung nach Anspruch 1;
(2) Formen der Zusammensetzung zu einer Folie;
(3) gegebenenfalls Aufschlitzen der Folie zu einem Band;
(4) Verstrecken der Folie oder des Bandes mit einem Streckverhältnis das größer als 3 ist, bevorzugt gleich oder größer als 8 bei einer Temperatur unterhalb des Schmelzpunktes Polypropylen-Polymers, um eine orientierte Folie oder ein orientiertes Band zu erzeugen;
(5) wahlweise Wärmebehandeln des orientierten Bandes nach Anspruch 4, um eine orientierte Faser zu erzeugen, und
(6) wahlweise Herstellen eines Gewebes oder textilen Materials aus dem orientierten Band oder aus der orientierten Faser.

10. Verfahren nach Anspruch 9, ferner umfassend den Schritt des Extrudierens der Zusammensetzung in ein kühlendes Wasserbad oder auf gekühlte Walzen zum Abschrecken, oder wobei die Zusammensetzung durch eine Ringdüse extrudiert wird, um eine schlauchförmige Blasfolie zu erzeugen, die einer Luftabschreckung unterzogen wird.

11. Verwendung eines Masterbatches, aufweisend Ethylen/Alkylacrylat-Copolymer-Modifikator und einen oder mehrere Füllstoffe, Mittel zum Mattieren, UV-Stabilisiermittel und Pigmente, für die Herstellung einer Folie nach einem der Ansprüche 1 bis 10.

12. Verwendung nach Anspruch 11, wobei der Masterbatch 75% bis 90 Gew.% Calciumcarbonat (CaCO₃) und 10% bis 25 Gew.% des Ethylen/Alkylacrylat-Copolymer-Modifikators aufweist.

## Revendications

1. Film orienté, préparé à partir d'une composition comprenant :
(a) au moins un polymère de polypropylène choisi dans le groupe constitué des homopolymères de polypropylène ; des copolymères aléatoires ou des copolymères séquencés de polypropylène et d'éthylène ; et des terpolymères aléatoires ou des terpolymères séquencés de polypropylène, d'éthylène et d'une autre oléfine ; et
(b) 1 à 30 % en poids ou, par ordre de préférence croissante, 2 à 30 % en poids, 2 à 20 % en poids ou 2 à 10 % en poids d'au moins un copolymère d'éthylène/acrylate d'alkyle, de préférence, d'un copolymère d'éthylène/acrylate d'alkyle produit dans un réacteur tubulaire ; et éventuellement,
(c) 0,01 à 40 % en poids ou, de préférence, 0,1 à 15 % en poids d'au moins un composant supplémentaire choisi dans le groupe constitué des charges, des agents délustrants, des stabilisateurs aux UV, des pigments et d'autres additifs ;
le groupement alkyle de l'acrylate d'alkyle ayant moins de 6 atomes de carbone ; l'acrylate d'alkyle étant, de préférence, présent dans le copolymère d'éthylène/acrylate d'alkyle dans une plage d'environ 5 à environ 30 % en poids ou, mieux encore, d'environ 10 à environ 25 % en poids ; l'acrylate d'alkyle étant, de préférence, l'acrylate de méthyle, l'acrylate d'éthyle ou l'acrylate de butyle ou, mieux encore, l'acrylate de méthyle ; et le film étant préparé par étirage à une température inférieure au point de fusion du polymère de polypropylène et selon un taux d'étirage supérieur à 3 ou, de préférence, d'environ 4:1 à environ 10:1.

2. Film orienté selon la revendication 1, qui est préparé par extrusion de ladite composition dans un bain d'eau de refroidissement ou sur des rouleaux refroidis en vue d'effectuer la trempe, ou dans lequel ladite composition est extrudée à travers une filière annulaire pour former un film tubulaire par soufflage, lequel est ensuite soumis à une trempe à l'air.

3. Bande, préparée par découpe longitudinale d'un film orienté selon la revendication 1 ou 2.

4. Textile tissé, sac très résistant, géotextile ou agrotextile, comprenant le film découpé en bandes selon la revendication 3.

5. Fibre préparée par étirage à chaud et par recuit de la bande de film découpée selon la revendication 3.

6. Fibre orientée filée en fusion, de préférence, monofilament orienté, fil orienté ou câble orienté, que l'on prépare à partir de la composition selon la revendication 1, dans laquelle la fibre est étirée à une température inférieure au point de fusion du polymère de polypropylène selon un taux d'étirage supérieur à 3.

7. Textile non tissé, préparé à partir d'une fibre filée en fusion selon la revendication 6.

8. Article fabriqué à partir du textile tissé selon la revendication 4, de la fibre selon la revendication 5 ou de la fibre filée en fusion selon la revendication 6, ledit article étant choisi dans le groupe constitué des articles suivants : corde, ficelle, cordon, gazon synthétique, sac d'emballage, sac très résistant, dossiers primaire et secondaire de tapis, géotextile, agrotextile, tissu industriel, lanière, courroie, habillement, couche, treillis, conteneur, filtre, bâche, banne, dais, bandeau, membrane de toiture, doublure de bagages, paquet et tissu d'ameublement.

9. Procédé de préparation d'une fibre, d'un film ou d'une bande orienté(e) comprenant :
(1) la préparation d'une composition selon la revendication 1 ;
(2) la formation de ladite composition sous la forme d'un film ;
(3) la découpe longitudinale éventuelle du film sous la forme d'une bande ;
(4) l'étirage du film ou de la bande selon un taux d'étirage supérieur à 3, de préférence, supérieur ou égal à 6, à une température inférieure au point de fusion du polymère de polypropylène, afin de produire un film orienté ou une bande orientée ;
(5) le recuit éventuel de la bande orientée obtenue à l'étape 4 pour former une fibre orientée ; et
(6) la production éventuelle d'un tissu ou d'un textile à partir de la bande orientée ou de la fibre orientée.

10. Procédé selon la revendication 9, comprenant en outre l'étape d'extrusion de la composition dans un bain d'eau de refroidissement ou sur des rouleaux refroidis pour effectuer une trempe, ou dans lequel ladite composition est extrudée à travers une filière annulaire pour former un film tubulaire par soufflage, lequel est soumis à une trempe à l'air.

11. Utilisation d'un mélange maître comprenant un modificateur de copolymère d'éthylène/acrylate d'alkyle et une ou plusieurs substances choisies parmi les charges, les agents délustrants, les stabilisateurs aux UV et les pigments, pour la fabrication d'un film selon l'une quelconque des revendications 1 à 10.

12. Utilisation selon la revendication 11, dans laquelle le mélange maître comprend 75 à 90 % en poids de carbonate de calcium (CaCO₃) et 10 à 25 % en poids du modificateur d'éthylène/acrylate d'alkyle.
